# EUROPEAN PATENT APPLICATION

(11) **EP 1 630 449 A1**
(43) Date of publication of application: **01.03.2006**
(21) Application number: 05005764.5
(22) Date of filing: 16.03.2005
(51) Int. Cl.: F16F 9/53, F16F 9/20, B60G 21/055

(54) **Shock absorber**

(30) Priority: 30.08.2004 JP 2004250762
(71) Applicant: SHOWA CORPORATION, Gyoda-shi, Saitama (JP)
(72) Inventor: Tomonaga, Takao, Asaba-cho, Iwata-gun, Shizuoka (JP); Toda, Tomoya, Asaba-cho, Iwata-gun, Shizuoka (JP)
(74) Representative: Grünecker, Kinkeldey, Stockmair & Schwanhäusser Anwaltssozietät

(57) **Abstract**

In a shock absorber (1) in which a bypass flow path (21) communicating oil chambers (14A, 14B) in both sides of a partition wall body (31) is provided within a casing (10), a fixed partition wall member (23) is provided between two movable partition wall members (22A, 22B) within the bypass flow path (21), viscous fluid chambers (24A, 24B) receiving a viscous fluid changing a shear stress in response to a magnetic field or an electric field are sectioned respectively between two movable partition wall members (22A, 22B) and the fixed partition wall member (23), and a flow path (25) communicating the viscous fluid chambers (24A, 24B) in both sides is provided in the fixed partition wall member (23), and a means (an electromagnetic coil (26)) for changing the shear stress of the viscous fluid by applying a magnetic field or an electric field to the viscous fluid is provided.

## Description

The present invention relates to a shock absorber such as a steering damper for a vehicle or the like.

In Japanese Patent Application Laid-open No. 7-190128 (patent document 1), there is disclosed a shock absorber in which a fluid region substantially containing no powder body is interposed between a seal portion of a cylinder and a region where an electric viscous fluid exists, in a piston type vibration controlling damper using the electric viscous fluid.

In accordance with the shock absorber described in the patent document 1, it is possible to prevent a seal portion 16 axially sealing a piston rod from being deteriorated as well as it is possible to reduce a used amount of the viscous fluid.

In Japanese Patent Application Laid-open No. 11-30262 (patent document 2), there is disclosed a shock absorber in which a pressure generating mechanism portion A is structured in both pressure chambers 5a, 5b, 6a and 6b provided between fixed vanes 2a and 2b in a side of a casing 1 and oscillating vanes 4a and 4b, and a fluid filled in the pressure generating mechanism portion A employs a fluid having a higher viscosity than that of a fluid filled in a flow path side of a damping force generating mechanism portion B. In the shock absorber described in the patent document 2, slidable seal members 33 and 34 (FIG. 3) are provided in the oscillating vanes 4a and 4b, and an embodiment 3 (FIG. 9) employs a solid particle which can flow within both the pressure chambers 5a, 5b, 6a and 6b.

In accordance with the shock absorber described in the patent document 2, since it is possible to reduce a leaking amount without requiring any high dimensional accuracy in the seal portion by filling a high viscosity oil in each of the pressure chambers 5a, 5b, 6a and 6b of the pressure generating mechanism portion A, it is possible to keep a high airtightness while limiting a working cost to a low level. Further, since the flow path limited by the damping force generating means forms a turbulent flow throttle by filling the low viscosity oil in the flow path side of the damping force generating mechanism portion, and the damping force generated by a change in an oil viscosity with respect to a temperature change is not affected, it is possible to reduce the change in the damping force property.

However, in the shock absorber described in the patent document 1, since a piston 12 (a large-diameter portion) slides along an inner periphery of a cylinder 14 in which the viscous fluid is filled, for example, in the case of an MR fluid in which a particle diameter of the viscous fluid is some micron meter unit, an outer periphery of the piston 12 (the large-diameter portion) or an inner periphery of the cylinder 14 which correspond to the sliding portion is violently worn away. Further, in the case of a magnetic fluid or an electric viscous fluid in which the particle diameter of the viscous fluid is some ten nanometer unit, a characteristic of a working fluid (a low friction characteristic and a low abrasion characteristic) are required in the viscous fluid itself although the outer periphery of the piston 12 (the large-diameter portion) or the cylinder 14 is not worn away, so that there is a problem that a sufficient damping force characteristic can not be obtained.

The shock absorber described in the patent document 2 does not disclose the object and the solving means of preventing the abrasion of the slidable seal members 33 and 34 generated in the case of using the fluid such as the MR fluid, the magnetic fluid, the ER fluid or the like within the pressure chamber.

An object of the present invention is to provide a shock absorber in which it is possible to prevent a partition wall body constituted by a piston of a piston rod body slidably inserted into a casing or a vane of a rotor slidably provided within the casing, and an inner periphery of the casing along which the partition wall body slides from being worn away, or prevent a slidable seal member from being worn away, and a characteristic of a working fluid (a low friction characteristic and a low abrasion characteristic) is not required in a viscous fluid itself.

The present invention relates to a shock absorber wherein a partition wall body is provided in an outer periphery of a rod movably provided within a casing, a seal member is provided between the casing and the partition wall body, and oil chambers filled with a working fluid having a lubricity are sectioned in both sides of the partition wall body. A bypass flow path is provided so as to bypass the partition wall body and communicate the oil chambers in both sides of the partition wall body, one movable partition wall member is provided in a side communicating with one oil chamber within the bypass flow path, and the other movable partition wall member is provided in a side communicating with the other oil chamber. A fixed partition wall member is provided between two movable partition wall members within the bypass flow path, viscous fluid chambers receiving a viscous fluid changing a shear stress in response to a magnetic field or an electric field are sectioned respectively between two movable partition wall members and the fixed partition wall member, and a flow path communicating the viscous fluid chambers in both sides is provided in the fixed partition wall member. A means for changing the shear stress of the viscous fluid by applying a magnetic field or an electric field to the viscous fluid is provided

Furthermore, the present invention relates to a shock absorber wherein a partition wall body is provided in an outer periphery of a rotating shaft movably provided within a casing, a seal member is provided between the casing and the partition wall body, and oil chambers filled with a working fluid having a lubricity are sectioned in both sides of the partition wall body. A bypass flow path is provided so as to bypass the partition wall body and communicate the oil chambers in both sides of the partition wall body, one movable partition wall member is provided in a side communicating with one oil chamber within the bypass flow path, and the other movable partition wall member is provided in a side communicating with the other oil chamber. A fixed partition wall member is provided between two movable partition wall members within the bypass flow path, viscous fluid chambers receiving a viscous fluid changing a shear stress in response to a magnetic field or an electric field are sectioned respectively between two movable partition wall members and the fixed partition wall member, and a flow path communicating the viscous fluid chambers in both sides is provided in the fixed partition wall member. A means for changing the shear stress of the viscous fluid by applying a magnetic field or an electric field to the viscous fluid is provided.

Furthermore, the present invention relates to a steering damper for a vehicle wherein a rod provided with a partition wall body in an outer periphery of an intermediate portion is slidably inserted into a cylinder hole provided in a casing via a guide member and a seal member in both ends of the cylinder hole, and oil chambers filled with a working fluid having a lubricity are sectioned in both sides of the partition wall body. A bypass flow path arranged in parallel to the cylinder hole and bypassing the partition wall body so as to communicate the oil chambers in both sides of the partition wall body is provided in the casing, one movable partition wall member is provided in a side communicating with one oil chamber within the bypass flow path, and the other movable partition wall member is provided in a side communicating with the other oil chamber. A fixed partition wall member is provided between two movable partition wall members within the bypass flow path, viscous fluid chambers receiving a viscous fluid changing a shear stress in response to a magnetic field or an electric field are sectioned respectively between two movable partition wall members and the fixed partition wall member, and a flow path communicating the viscous fluid chambers in both sides is provided in the fixed partition wall member. A means for changing the shear stress of the viscous fluid by applying a magnetic field or an electric field to the viscous fluid is provided.

In this case, the viscous fluid used in the present invention can employ an MR fluid (a magnetic viscous fluid), a magnetic fluid and an ER fluid (an electric viscous fluid). The MR fluid and the magnetic fluid changes a shear stress in response to a strength of a magnetic field. The ER fluid changes the shear stress in response to a strength of an electric field.

The present invention will be more fully understood from the detailed description given below and from the accompanying drawings which should not be taken to be a limitation on the invention, but are for explanation and understanding only. The drawings:
FIG. 1 is a cross sectional view showing a shock absorber; and
FIG. 2 is an enlarged view of a main portion in FIG. 1.

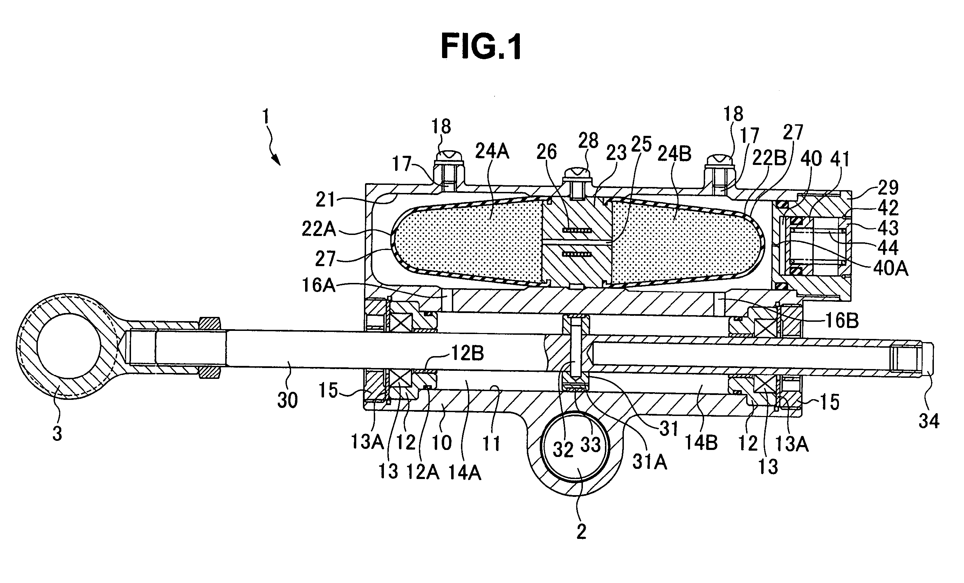

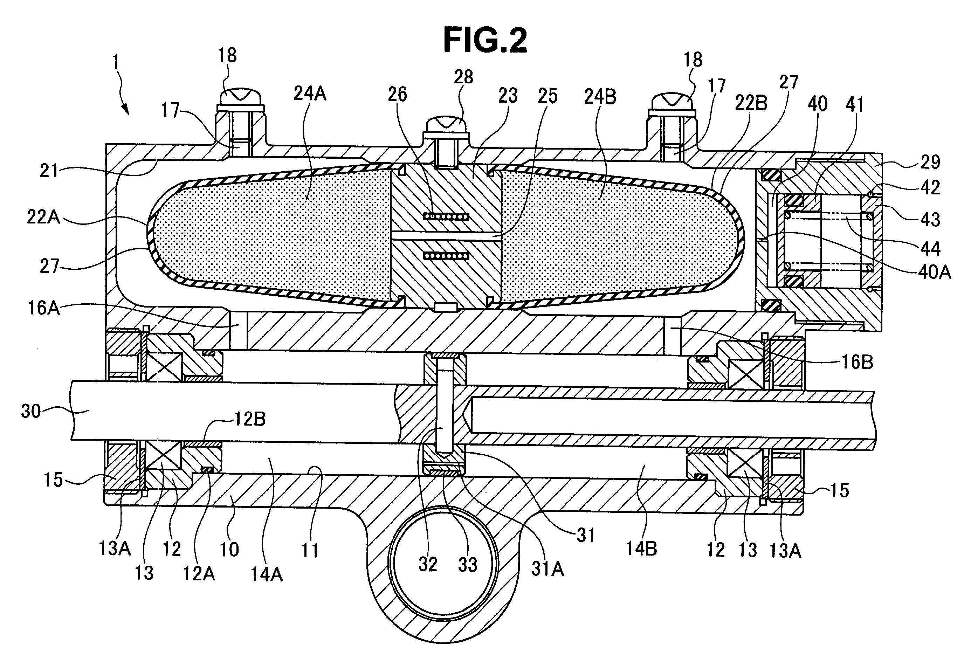

A shock absorber 1 in FIGS. 1 and 2 has a casing 10 and a rod 30, and structures a steering damper for a vehicle provided between a steering handle and a vehicle body side frame by attaching a vehicle body side attaching portion 2 of the casing 10 to the vehicle body side frame, and attaching a handle side attaching portion 3 of the rod 30 to the steering handle.

The shock absorber 1 is structured such that the rod 30 provided with a partition wall body (a piston) 31 in an outer periphery of an intermediate portion is slidably inserted into a cylinder hole 11 provided in the casing 10 via a guide member 12 and a seal member 13 in both ends of the cylinder hole 11, and oil chambers 14A and 14B filled with a working fluid having a lubricity are sectioned in both sides of the partition wall body 31. The partition wall body 31 is provided with an orifice flow path 31A communicating the oil chambers 14A and 14B in both sides.

In other words, the guide member 12 is inserted and attached to inner diameter portions in both ends of the cylinder hole 11 of the casing 10 in a liquid tight manner via an O-ring 12A, a bush 12B is pressure inserted to an inner periphery of the guide member 12, the seal member 13 is loaded to an outer side of the bush 12B, and a cap 15 screwed with an inner diameter portion of the cylinder hole 11 presses and holds the guide member 12 against a step portion of the inner diameter portion of the cylinder hole 11 via a seal cap 13A Further, the rod 30 fixes the partition wall body 31 to an intermediate portion by a pin 32, and makes a piston ring 33 fitted and attached to an outer periphery of the partition wall body 31 to be slidable with respect to the inner periphery of the cylinder hole 11. Both end portions of the rod 30 slide along the guide member 12 and the seal member 13 in both ends of the cylinder hole 11 so as to protrude to an outer side. The handle side attaching portion 3 mentioned above is attached to one end side of the rod 30, and a sealing plug 34 formed as a lightening hollow portion is screwed with the other end side of the rod 30.

The shock absorber 1 is provided with a bypass flow path 21 in parallel to the cylinder hole 11, in the casing 10. The bypass flow path 21 bypasses the partition wall body 31 in the inner portion of the cylinder hole 11, and communicates the oil chambers 14A and 14B in both sides of the partition wall body 31. One movable partition wall member 22A is provided in a side communicating with one oil chamber 14A within the bypass flow path 21 via a communicating path 16A, and the other movable partition wall member 22B is provided in a side communicating with the other oil chamber 14B via a communicating path 16B.

The shock absorber 1 is provided with a fixed partition wall member 23 between two movable partition wall members 22A and 22B within the bypass flow path 21. Two viscous fluid chambers 24A and 24B are respectively sectioned between two movable partition wall members 22A and 22B, and the fixed partition wall member 23. The fixed partition wall member 23 is provided with a flow path communicating the viscous fluid chambers 24A and 24B in both sides, that is, an orifice flow path 25 in the present embodiment. The viscous fluid chambers 24A and 24B are filled with a viscous fluid changing a shear stress in response to the magnetic field or the electric field, for example, an MR fluid, a magnetic fluid or an ER fluid.

The shock absorber 1 is provided with a means for changing a shear stress of the viscous fluid by applying a magnetic field or an electric field to the viscous fluid received in the viscous fluid chambers 24A and 24B, for example, an electromagnetic coil 26. In the present embodiment, the fixed partition wall member 23 is made of a synthetic resin, the electromagnetic coil 26 is integrally formed within the fixed partition wall member 23 in a buried state, the electromagnetic coil 26 is wound around the flow path 25 of the fixed partition wall member 23, and the magnetic field or the electric field having an appropriate strength is applied to the flow path 25. A magnetic field control apparatus or an electric field control apparatus which are not illustrated is connected to the electromagnetic coil 26, whereby it is possible to regulate the strength of the magnetic field or the electric field applied to the flow path 25.

Two movable partition wall members 22A and 22B are constituted by an elastic partition wall member made of a rubber or the like, constituted by a bladder 27 having a closed-end tubular shape in the present embodiment, and respective opening portions of two bladders 27 are engaged with and attached to annular grooves provided in outer peripheries of both end portions of the fixed partition wall member 23. A sub-assembly in which the bladders 27 (the movable partition wall members 22A and 22B) are engaged with and attached to both end portions of the fixed partition wall member 23 and the viscous fluid is received in the viscous fluid chambers 24A and 24B sectioned in inner sides of the respective bladders 27 is inserted from one end opening portion of the bypass flow path 21 to an inner periphery thereof, the fixed partition wall member 23 is arranged in a center in an axial direction of the inner periphery of the bypass flow path 21, and the fixed partition wall member 23 is fixed by a fixing bolt 28 screwed with the casing 10. Accordingly, the opening portions of the respective bladders 27 are fixed in a pinched state between the outer peripheries of both end portions of the fixed partition wall member 23 and the inner periphery of the bypass flow path 21.

The shock absorber 1 is structured such that the cap 29 is sealed in a liquid tight manner to one end opening portion of the bypass flow path 21 to which the fixed partition wall member 23 and the bladders 27 (the movable partition wall members 22A and 22B) are inserted, the working fluid is filled in the oil chambers 14A and 14B of the cylinder hole 11 and the bypass flow path 21 from a working fluid supply and discharge port 17 provided in the casing 10, and the supply and discharge port 17 is closed by a plug bolt 18. The working fluid is provided for lubricating the guide member 12 of the cylinder hole 11 and the seal member 13 in addition to functioning as a medium for transmitting a displacement of the rod 30 to the movable partition wall members 22A and 22B (the bladders 27).

In this case, the shock absorber 1 is structured such that a temperature compensating oil chamber 40 is provided in the cap 29 sealing the bypass flow path 21, and the temperature compensating oil chamber 40 is sectioned in a liquid tight manner by a free piston 41, and is communicated with the bypass flow path 21 via an orifice hole 40A pieced in the cap 29. The free piston 41 is pressurized by a stop ring 42 and a spring 44 backed up by a stopper 43.

The shock absorber 1 is operated as follows.
(1) When the rod 30 moves to one of the right and left sides on the basis of the steering operation of the vehicle, the partition wall body 31 of the rod 30 discharges the working fluid in one oil chamber of the cylinder hole 11, for example, the oil chamber 14A from the communication path 16A to one side of the bypass flow path 21.
(2) The working fluid discharged to one side of the bypass flow path 21 feeds the viscous fluid in the viscous fluid chamber 24A in the inner portion of the corresponding movable partition wall member 22A (the bladder 27) to viscous fluid chamber 24B in a side of the other movable partition wall member 22B (the bladder 27) via the orifice flow path 25.
(3) The viscous fluid fed to the viscous fluid chamber 24B in the side of the movable partition wall member 22B (the bladder 27) inflates the movable partition wall member 22B, and the inflating movable partition wall member 22B feeds the working fluid in the other side of the bypass flow path 21 from the communication path 16B to the other oil chamber 14B of the cylinder hole 11.
(4) The shock absorber 1 generates the damping force caused by a flow resistance at a time when the viscous fluid passes through the orifice flow path 25 in the item (2) mentioned above. Further, it is possible to change the viscosity of the viscous fluid passing through the orifice flow path 25 by regulating the strength of the magnetic field or the electric field which the electromagnetic coil 26 applies to the orifice flow path 25, by means of the magnetic field control apparatus and the electric field control apparatus. As a result, it is possible to regulate the damping force generated due to the flow resistance of the viscous fluid in the orifice flow path 25.

In accordance with the present embodiment, the following operations and effects can be achieved.
(a) Since the partition wall body 31 provided in the rod 30 is not in contact with the viscous fluid, the outer peripheral portion of the partition wall body 31 or the inner peripheral portion of the casing 10 is not worn away. Further, since the piston ring 33 in the outer periphery of the partition wall body 31 and the seal member 13 brought into slidable contact with the rod 30 are in contact only with the working fluid having the lubricity and are not in contact with the viscous fluid, the piston ring 33 and the seal member 13 are neither damaged nor worn away. Further, since the characteristic of the working fluid is not required in the viscous fluid, the damping force characteristic is not affected.
(b) Since the viscous fluid chambers 24A and 24B are provided only in the inner sides of the movable partition wall members 22A and 22B, it is possible to reduce a used amount of the expensive viscous fluid. As a result, it is possible to reduce a cost of the shock absorber 1. Further, since it is possible to reduce the use amount of the heavy viscous fluid, it is possible to achieve a weight saving of the shock absorber 1.
(c) Since the movable partition wall members 22A and 22B provided within the bypass flow path 21 are constituted by the elastic partition wall member made of the rubber or the like, it is not necessary to provide with the inner peripheral seal member of the bypass flow path 21, and the problem that the seal member is worn away is not absolutely generated.
(d) The piston ring 33 serving as a seal and guide member is attached to the outer periphery of the partition wall body 31 provided in the rod 30. However, the leaking characteristic in the lateral direction of the seal and guide member is not uniform, but the working fluid is accumulated in any one of the oil chambers 14A and 14B, and any one of the movable partition wall members 22A and 22B becomes in a contracted state. As a result, the operation of the partition wall body 31 is affected. At this time, the left and right oil chambers 14A and 14B are communicated with each other by arranging the orifice flow path 31A communicating the left and right oil chambers 14A and 14B in the partition wall body 31, any one contracted movable partition wall member 22A or 22B is restored to the original state, and the internal pressures of the left and right oil chambers 14A and 14B become equal with time, whereby it is possible to maintain a neutral position of the handle.

In this case, the orifice flow path 31A may be constituted by a gap between the outer periphery of the partition wall body 31 and the inner periphery of the casing 10.
(e) In the case that the shock absorber 1 is constituted by the steering damper, it is possible to keep the rod 30 at a neutral position. Accordingly, the handle always keeps a straight going state and the structure is advantageous.
(f) It is possible to simultaneously form the fixed partition wall member 23 and assemble the electromagnetic coil 26 by integrally forming the electromagnetic coil 26 in the fixed partition wall member 23 made of the synthetic resin. Accordingly, it is possible to easily manufacture and it is possible to reduce the cost.
(g) Since the cylinder hole 11 along which the rod 30 slides, and the bypass flow path 21 arranged in parallel to the cylinder hole 11 are provided within the casing 10, and the viscous fluid chambers 24A and 24B are provided within the bypass flow path 21, it is possible to make the steering damper compact.
(h) Since the bladder 27 having the closed-end tubular shape is used as the movable partition wall members 22A and 22B, the contact area with the fluid is increased, it is possible to reduce a surface pressure per a unit of the elastic partition wall member, and it is possible to improve a durability of the movable partition wall members 22A and 22B.

As heretofore explained, embodiments of the present invention have been described in detail with reference to the drawings. However, the specific configurations of the present invention are not limited to the illustrated embodiments but those having a modification of the design within the range of the presently claimed invention are also included in the present invention. For example, the movable partition wall member in accordance with the present invention may be constituted by a free piston. At this time, the movable partition wall member may be constituted by the free piston, and a coil spring which is provided in the viscous fluid chamber side of the free piston and energizes the free piston.

The shock absorber in accordance with the present invention can be applied to a damper for a suspension interposed between a vehicle body side and a tire wheel side without being limited to the steering damper.

The shock absorber in accordance with the present invention can be applied to a rotary damper type shock absorber without being limited to the piston rod type shock absorber. At this time, the shock absorber can be structured such that a partition wall body (a vane) is provided in an outer periphery of a rotating shaft provided within the casing so as to freely oscillate, a seal member is provided between the casing and the partition wall body, and an oil chamber filled with the working fluid having the lubricity is sectioned in both sides of the partition wall body.

In this case, the following operations and effects can be achieved.
(a) Since the partition wall body provided in the rotating shaft is not in contact with the viscous fluid, the outer peripheral portion of the partition wall body or the inner peripheral portion of the casing is not worn away. Further, since a seal member in the outer periphery of the partition wall body and a seal member brought into slidable contact with the rotating shaft are in contact only with the working fluid having the lubricity and are not in contact with the viscous fluid, each of seal members are neither damaged nor worn away. Further, since the characteristic of the working fluid is not required in the viscous fluid, the damping force characteristic is not affected.
(b) Since the viscous fluid chambers are provided only in the inner sides of the movable partition wall members, it is possible to reduce a used amount of the expensive viscous fluid. As a result, it is possible to reduce a cost of the shock absorber. Further, since it is possible to reduce the use amount of the heavy viscous fluid, it is possible to achieve a weight saving of the shock absorber.
(c) The piston ring serving as a seal and guide member is attached to the outer periphery of the partition wall body provided in the rotating shaft. However, the leaking characteristic in the lateral direction of the seal and guide member is not uniform, but the working fluid is accumulated in any one of the oil chambers, and any one of the movable partition wall members becomes in a contracted state. As a result, the operation of the partition wall body is affected. At this time, the left and right oil chambers are communicated with each other by arranging the orifice flow path communicating the left and right oil chambers and in the partition wall body, any one contracted movable partition wall member is restored to the original state, and the internal pressures of the left and right oil chambers become equal with time, whereby it is possible to maintain a neutral position of the handle.

In this case, the orifice flow path may be constituted by a gap between the outer periphery of the partition wall body and the inner periphery of the casing.

## Claims

1. A shock absorber (1) wherein a partition wall body (31) is provided in an outer periphery of a rod (30) movably provided within a casing (10), a seal member (13) is provided between the casing (10) and the partition wall body (31), and oil chambers (14A, 14B) filled with a working fluid having a lubricity are sectioned in both sides of the partition wall body (31),
wherein a bypass flow path (21) is provided so as to bypass the partition wall body (31) and communicate the oil chambers (14A, 14B) in both sides of the partition wall body (31), one movable partition wall member (22A) is provided in a side communicating with one oil chamber (14A) within the bypass flow path (21), and the other movable partition wall member (22B) is provided in a side communicating with the other oil chamber (14B),
wherein a fixed partition wall member (23) is provided between two movable partition wall members (22A, 22B) within the bypass flow path (21), viscous fluid chambers (24A, 24B) receiving a viscous fluid changing a shear stress in response to a magnetic field or an electric field are sectioned respectively between two movable partition wall members (22A, 22B) and the fixed partition wall member (23), and a flow path (25) communicating the viscous fluid chambers (24A, 24B) in both sides is provided in the fixed partition wall member (23), and
wherein a means for changing the shear stress of the viscous fluid by applying a magnetic field or an electric field to the viscous fluid is provided.

2. A shock absorber (1) wherein a partition wall body (31) is provided in an outer periphery of a rotating shaft movably provided within a casing (10), a seal member (13) is provided between the casing (10) and the partition wall body (31), and oil chambers (14A, 14B) filled with a working fluid having a lubricity are sectioned in both sides of the partition wall body (31),
wherein a bypass flow path (21) is provided so as to bypass the partition wall body (31) and communicate the oil chambers (14A, 14B) in both sides of the partition wall body (31), one movable partition wall member (22A) is provided in a side communicating with one oil chamber (14A) within the bypass flow path (21), and the other movable partition wall member (22B) is provided in a side communicating with the other oil chamber (14B),
wherein a fixed partition wall member (23) is provided between two movable partition wall members (22A, 22B) within the bypass flow path (21), viscous fluid chambers (24A, 24B) receiving a viscous fluid changing a shear stress in response to a magnetic field or an electric field are sectioned respectively between two movable partition wall members (22A, 22B) and the fixed partition wall member (23), and a flow path (25) communicating the viscous fluid chambers (24A, 24B) in both sides is provided in the fixed partition wall member (23), and
wherein a means for changing the shear stress of the viscous fluid by applying a magnetic field or an electric field to the viscous fluid is provided

3. A shock absorber (1) as claimed in claim 1 or 2, wherein the movable partition wall members (22A, 22B) are constituted by an elastic partition wall member made of a rubber or the like.

4. A shock absorber (1) as claimed in claim 1 or 2, wherein the movable partition wall members (22A, 22B) are constituted by a free piston, and a coil spring provided in the viscous fluid chamber side of the free piston and energizing the free piston.

5. A shock absorber (1) as claimed in any one of claims 1 to 4, wherein the partition wall body (31) is provided with an orifice flow path (31A) communicating the oil chambers (14A, 14B) in both sides.

6. A shock absorber (1) as claimed in claim 5, wherein the shock absorber is constituted by a steering damper for a vehicle provided between a steering handle and a vehicle body side frame.

7. A shock absorber (1) as claimed in any one of claims 1 to 6, wherein the fixed partition wall member (23) is made of a synthetic resin, the means for changing the shear stress of the viscous fluid is constituted by an electromagnetic coil (26), and the coil (26) is integrally formed within the fixed partition wall member (23).

8. A shock absorber (1) as claimed in claim 5, wherein the orifice flow path (31A) is constituted by a gap between the outer periphery of the partition wall body (31) and the inner periphery of the casing (10).

9. A shock absorber as claimed in any one of claims 1 to 8, wherein the viscous fluid is constituted by any one of a magnetic viscous fluid, a magnetic fluid and an electric viscous fluid.

10. A steering damper for a vehicle wherein a rod (30) provided with a partition wall body (31) in an outer periphery of an intermediate portion is slidably inserted into a cylinder hole (11) provided in a casing (10) via a guide member (12) and a seal member (13) in both ends of the cylinder hole (11), and oil chambers (14A, 14B) filled with a working fluid having a lubricity are sectioned in both sides of the partition wall body (31),
wherein a bypass flow path (21) arranged in parallel to the cylinder hole (11) and bypassing the partition wall body (31) so as to communicate the oil chambers (14A, 14B) in both sides of the partition wall body (31) is provided in the casing (10), one movable partition wall member (22A) is provided in a side communicating with one oil chamber (14A) within the bypass flow path (21), and the other movable partition wall member (22B) is provided in a side communicating with the other oil chamber (14B),
wherein a fixed partition wall member (23) is provided between two movable partition wall members (22A, 22B) within the bypass flow path (21), viscous fluid chambers (24A, 24B) receiving a viscous fluid changing a shear stress in response to a magnetic field or an electric field are sectioned respectively between two movable partition wall members (22A, 22B) and the fixed partition wall member (23), and a flow path (25) communicating the viscous fluid chambers (24A, 24B) in both sides is provided in the fixed partition wall member (23), and
wherein a means for changing the shear stress of the viscous fluid by applying a magnetic field or an electric field to the viscous fluid is provided.

11. A steering damper for a vehicle as claimed in claim 10, wherein the two movable partition wall members (22A, 22B) are constituted by bladders (27) having a closed-end tubular shape, opening portions of the respective bladders (27) are pinched and fixed between outer peripheries of both end portions of the fixed partition wall members (23) provided within the bypass flow path (21) and an inner periphery of the bypass flow path (21), respectively, and a viscous fluid chamber (24A, 24B) is sectioned in an inner side of each of the bladders (27).

12. A shock absorber as claimed in claims 10 or 11, wherein the viscous fluid is constituted by any one of a magnetic viscous fluid, a magnetic fluid and an electric viscous fluid.
